# EUROPÄISCHE PATENTANMELDUNG

(11) **EP 2 672 188 A1**
(43) Veröffentlichungstag der Anmeldung: **11.12.2013**
(21) Anmeldenummer: 13401052.9
(22) Anmeldetag: 30.05.2013
(51) Int. Cl.: F24D 11/02, F25B 30/06, F28D 7/10, F28D 21/00, E03C 1/00

(54) **Wärmepumpenanlage zur Wärmerückgewinnung aus Abwässern**

(30) Priorität: 05.06.2012 DE 202012102071 U
(71) Anmelder: hpe hüttner projektentwicklung, 66919 Hermersberg (DE); KÖNIG Wärmepumpen GmbH, 04910 Elsterwerda (DE)
(72) Erfinder:
(74) Vertreter: Hanelt, Holger

(57) **Zusammenfassung**

Die Erfindung betrifft eine Wärmepumpenanlage zur Wärmerückgewinnung aus Abwässern. Sie ist insbesondere zur Wärmegewinnung in Gebäuden und baulichen Anlagen sowie in Abwasserkanälen und Abwasserdruckleitungen, in denen regelmäßig größere Mengen von Abwasser mit einer Temperatur oberhalb der für die Ableitung geforderten Mindesttemperatur anfallen. Die Aufgabe der Erfindung ist es, eine Wärmepumpenanlage vorzuschlagen, die eine effektive und möglichst kontinuierliche Ausnutzung der Wärme des Abwassers gewährleistet. Hierbei wird als Abwasser jegliche verunreinigte Flüssigkeit angesehen. Als Beispiele seien hier nur Deponiesickerwasser, Molke, Sickerwasser, Kühlwasser oder Schlämme genannt.

Diese Aufgabe wird erfindungsgemäß durch eine Wärmepumpenanlage entsprechend den Merkmalen des Hauptanspruches realisiert.

Im Gegensatz zum bekannten Stand der Technik wird hierbei die Wärme von Abwasser zu Kältemittel direkt übertragen.

Eine erfindungsgemäße Wärmepumpenanlage zur Wärmerückgewinnung aus Abwässern besteht aus einem Wärmetauscher (2), der einerseits mit der Abwasserleitung (1) verbunden und zum anderen in einen Kältemittelkreislauf eingebunden ist.

Dieser Kältemittelkreislauf soll zumindest aus einem Verdichter (4), dem Kondensator (5), dem Expansionsventil (6) und dem als Verdampfer dienenden Wärmetauscher (2) bestehen.

## Beschreibung

Die Erfindung betrifft eine Würmepumpenanlage zur Wärmerückgewinnung aus Abwässern. Sie ist insbesondere zur Wärmegewinnung in Gebäuden und baulichen Anlagen sowie in Abwasserkanälen und Abwasserdruckleitungen, in denen regelmäßig größere Mengen von Abwasser mit einer Temperatur oberhalb der für die Ableitung geforderten Mindesttemperatur anfallen. Der Einsatz der erfindungsgemäßen Anlage kann beispielsweise im Wohnungsbau, in Hallenbädern, Molkereibetrieben, Hotels und Wäschereien sehr sinnvoll erfolgen.

Bereits seit Längerem wird versucht, die in Abwässern enthaltene Wärme zu Heizungszwecken auszunutzen.

Hierzu existiert eine Vielzahl von Vorschlägen, die alle davon ausgehen, dass in die Kanalisationsrohre verschiedenartige Wärmetauscher eingebaut oder in deren Wandungen integriert werden, die durch ein Wärmeträgermedium durchflossen werden, wobei das Wärmeträgermedium zumeist über eine Wärmepumpe gekühlt wird.

So ist aus der DE 35 21 585 Al eine Vorrichtung zur Gewinnung der Schmutzwasser-Abwärme bekannt, die eine Rohranordung besitzt, die im Innern des Mantels des Abwasserrohres oder in einer das Abwasserrohr lagernden Betonsohle liegt. Auf diese Weise wird die Abwärme indirekt durch das Abwasser-Rohrmaterial an ein Wärmeaustauschmedium abgegeben. Diese Vorrichtung hat den Vorteil, dass die als Wärmetauscher dienende Rohranordung nicht mit dem Schmutzwasser in Verbindung steht und sich daher Probleme wie Korrosion, Erosion oder die Anlagerung von Verunreinigungen nicht stellen. Sie weist aber den gravierenden Nachteil auf, dass die Wärme durch das sehr schlecht Wärme leitende Rohrmaterial hindurchgeleitet werden muss. Sie hat deshalb eine unbefriedigende Wärmeausbeute und ist wirtschaftlich nicht optimal.

Auch in der DE 19719311 C2 wird ein Wärmetauscher beansprucht. Bei dieser Abwärme-Installation für Abwasser mit einer Trockenwasserrinne zur Leitung von Abwasser ist die Wärme leitende Tauschflüche plattenförmig oder profiliert ausgebildet und liegt zumindest teilweise an der Innenwand der Trockenwasserrinne an. Dadurch, dass die Tauschfläche in direktem Kontakt mit dem Abwasser steht, kann das Wärmetauscherelement über diese Tauschfläche direkt Wärme aus dem Abwasser aufnehmen.

Die EP 1 815 073 B1 beschreibt einen Absorber für ein Rohr oder Kanalbauwerk mit wenigstens einem Vorlaufanschluss und wenigstens einem Rücklaufanschluss und einem oder mehreren, einen Vorlauf mit einem Rücklauf verbindenden Absorberkanblen, wobei die Absorberkanäle des Absorbers in einer Absorberkanalmatte zusammengefasst eine gegenständliche Einheit bilden. Dabei besteht ein in das Rohr- oder Kanalbauwerk einziehbarer Inliner aus einem aushärtbaren Material, das die Absorberkanalmatte im Bereich der Sohle des Rohr- oder Kanalbauwerks nach dem Aushärten fixiert.

Auch die DE10 2005 048 689B3 schlägt einen Wärmetauscher zur Abwasserwärmenutzung vor.

Dabei soll ein Wärmetauscherelement zum nachträglichen Einbau in Abwasserrohrleitungen, dessen Oberseite eine Wärme leitende Tauschfläche mit daran angeordneten Wärmetauscherkammern aufweist, im Bereich zwischen der Einlaufrinne und den Ablaufflächen Leitungen zum Vorlauf, Rücklauf und zur Verteilung angeordnet werden und der Sohlpunkt der Einlaufrinne, der untere Bereich der Leitungen und/oder die freien Ränder der Ablaufflüchen als Auflager zur Anordnung des Wärmetauscherelements in der Abwasserrohrleitung ausgebildet sein.

In allen Fällen dient ein Wärmetauschermedium dazu, die Wärme aus dem Abwasserkanal aufzunehmen und einer Wärmepumpe zuzuführen.

Nachteilig ist hierbei, dass sich durch die Anordnung eines Zwischenkreises zwischen Abwasser und Kältemittelverdampfer der Wärmepumpe die Effizienz der Wärmepumpe verschlechtert, da sowohl im Bereich der Wärmeaufnahme als auch der Wärmeabgabe des Zwischenkreises ein Temperaturgefälle notwendig ist, um den Wärmeübergang zu gewährleisten.

Aufgabe der Erfindung ist es, eine Wärmepumpenanlage vorzuschlagen, die eine effektive und möglichst kontinuierliche Ausnutzung der Wärme des Abwassers gewährleistet. Hierbei wird als Abwasser jegliche verunreinigte Flüssigkeit angesehen. Als Beispiele seien hier nur Deponiesickerwasser, Molke, Sickerwasser, Kühlwasser oder Schlämme genannt.

Diese Aufgabe wird erfindungsgemäß durch eine Wärmepumpenanlage entsprechend den Merkmalen des Hauptanspruches realisiert.

Im Gegensatz zum bekannten Stand der Technik wird hierbei die Wärme von Abwasser zu Kältemittel direkt übertragen.

Weitere Verbesserungen oder Variationen können gemäß den in den Unteransprüchen dargestellten Merkmalen realisiert werden.

Eine erfindungsgemäße Wärmepumpenanlage zur Wärmerückgewinnung aus Abwässern besteht aus einem Wärmetauscher (2), der einerseits mit dem Abwasserkanal (1) oder der Abwasserdruckleitung (1) verbunden und zum anderen in einen Kältemittelkreislauf eingebunden ist.

Dieser Kältemittelkreislauf soll zumindest aus einem Verdichter (4), dem Kondensator (5), dem Expansionsventil (6) und dem als Verdampfer dienenden Wärmetauscher (2) bestehen. Selbstverständlich kann der Kältemittelkreislauf mit weiteren Mess- Steuerungs-, Regelungs- und Sicherungselementen ausgerüstet sein, die, da sie hierfür allgemein üblich sind, in der nachfolgenden Beschreibung nicht weiter ausdrücklich erwähnt werden müssen.

Auf der Abwasserseite ist der Wärmetauscher (2) direkt oder über einen Abwassersammelbehälter (11) und eine Abwasserpumpe (12) mit der Abwasserleitung (1) verbunden. Dadurch kann das anfallende Abwasser mittels der Abwasserpumpe (12) kontinuierlich dem Wärmetauscher (2) zugeführt werden.

Nachdem im Wärmetauscher (2) dem Abwasser durch das verdampfende Kältemittel die Wärme entzogen wurde, wird es von dort in die Abwasserleitung (1) zurückgeleitet.

Zur Realisierung der Erfindung ist es möglich, dass das Abwasser durch die Abwasserpumpe (12) über die Abwasserzuleitung (13) dem Wärmetauscher (2) zugeführt wird. In diesem Falle wird das zweite Ende des Wärmetauschers (2) über eine Abwasserableitung (14) mit der Abwasserleitung (1) verbunden. Dabei wird der Wärmetauscher (2) als Verdampfer des Kältemittelkreislaufs benutzt.

Für den Fall, dass das Abwasser mit größeren Schmutzpartikeln belastet ist, erscheint es sinnvoll, wenn die Abwasserpumpe (12) eine Zerkleinerungseinrichtung besitzt, durch die im Abwasser enthaltene Schmutzpartikel zerkleinert werden. Dies ist jedoch kein Bestandteil der Erfindung.

Für eine Wärmepumpenanlage, die in eine bestehende Abwasserdruckleitung eingebaut wird, kann der Wärmetauscher (2) direkt in die Abwasserdruckleitung eingebunden sein.

Durch eine parallel zum Wärmetauscher (2) angeordnete Bypassleitung können gegebenenfalls Abwassermengen, die die Kapazität des Wärmetauschers (2) überschreiten, abgeleitet werden. Auch umgekehrt kann ein Teilstrom des Abwassers im Bypass über den Wärmetauscher (2) geleitet werden.

Durch Reinigungsstutzen am Beginn und Ende der gesamten Abwasser-Fließstrecke im Bypass oder in einer Teilstrecke, die, mit manueller, halbautomatischer oder automatischer Reinigungsvorrichtung ausgerüstet sind, lassen sich Störungen durch abgesetzte Partikel oder partielle Eisansätze vermeiden.

Weiterhin können Messeinrichtungen für Messung der Druckdifferenz vor und nach dem Wörmeübertrager zur Festlegung, Auslösung oder Steuerung der Reinigung oder des Reinigungsintervalls, Temperaturmessung des Abwassers vor und nach dem Wörmeübertrager oder Volumenstrommessung des Abwassers Messwerte zur Steuerung und Leistungserfassung der Anlage integriert werden.

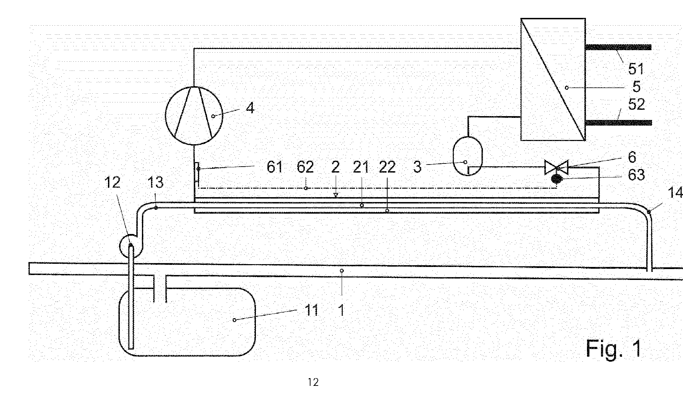

Die Erfindung soll im Folgenden anhand der Zeichnung Figur 1 in Form eines Ausführungsbeispiels erläutert werden. Dabei zeigt Fig. 1 die schematische Darstellung der Anlage.

Hierbei ist der Wärmetauscher 2 als lineares System dargestellt, obwohl die Anlage in der Regel aus Platzgründen mit einem auch mit anderen Formen von Wärmetauschern 2 ausgerüstet sein kann.

Eine erfindungsgemäße Wärmepumpenanlage zur Wärmerückgewinnung aus Abwässern besteht aus einem Wärmetauscher 2, der einerseits mit der Abwasserleitung 1 verbunden und zum anderen in einen Kältemittelkreislauf eingebunden ist.

Dieser Kältemittelkreislauf besteht aus einem Verdichter 4, dem Kondensator 5 dem Expansionsventil 6 und dem als Verdampfer dienenden Wärmetauscher 2 und ist mit weiteren Steuerungs-, Regelungs- und Sicherungselementen ausgerüstet, von denen in der Zeichnung der Temperaturfühler 61, die Steuerleitung 62 sowie der Aktuator 63, der das Expansionsventil 6 betätigt, dargestellt sind.

Auf der Abwasserseite ist der Wärmetauscher 2 über einen Abwassersammelbehälter 11 und eine Abwasserpumpe 12 mit der Abwasserleitung 1 verbunden. Dadurch kann das anfallende Abwasser mittels der Abwasserpumpe 12 kontinuierlich dem Wärmetauscher 2 zugeführt werden.

Nachdem im Wärmetauscher 2 dem Abwasser durch das verdampfende Kältemittel die Wärme entzogen wurde, wird es von dort in die Abwasserleitung 1 zurückgeleitet.

Dabei wird das Abwasser durch die Abwasserpumpe 12 über die Abwasserzuleitung 13 dem Innenrohr 21 des Wärmetauschers 2 zugeführt und das zweite Ende des Innenrohres 21 des Wärmetauschers 2 über eine Abwasserableitung 14 mit der Abwasserleitung 1 verbunden. Dabei dient das Mantelrohr 22 des Wärmetauschers 2 als Verdampfer des Kältemittelkreislaufs. Somit kann zusätzlich Wärme aus der Umgebungsluft vom Kältemittel aufgenommen werden.

Zur Zerkleinerung größerer Schmutzpartikel im Abwasser besitzt die Abwasserpumpe 12 eine nicht dargestellte Zerkleinerungseinrichtung, die bewirkt, dass im Abwasser enthaltene Schmutzpartikel zerkleinert werden.

### Aufstellung der verwendeten Bezugszeichen

- Abwasserleitung: 1
- Abwassersammelbehülter: 11
- Abwasserpumpe: 12
- Wärmetauscher: 2
- Flüssigkeitssammler: 3
- Verdichter: 4
- Kondensator: 5
- Heizungs-Vorlauf: 51
- Heizungs-Rücklauf: 52
- Expansionsventil: 6
- Temperaturfühler: 61
- Steuerleitung: 62
- Aktuator: 63
- Abwasserzuleitung: 13
- Abwasserableitung: 14

## Patentansprüche

1. Würmepumpenanlage zur Wärmerückgewinnung aus Abwässern, **dadurch gekennzeichnet, dass** ein Wärmetauscher (2) direkt oder über einen Abwasserpufferbehälter (11) und/oder eine Abwasserpumpe (12) mit der Abwasserleitung (1) so verbunden ist, dass das anfallende Abwasser dem Wärmetauscher (2) zugeführt und von dort in die Abwasserleitung (1) geleitet wird, dass weiterhin ein Wärmepumpenkreislauf vorhanden ist, der zumindest aus einem Verdichter (4), dem Kondensator (5), dem Expansionsventil (6) und dem als Verdampfer dienenden Wärmetauscher (2) besteht, die in diese Reihenfolge zusammengeschlossen sind.

2. Wärmepumpenanlage nach Anspruch 1, **dadurch gekennzeichnet, dass** die Abwasserpumpe (12) über die Abwasserzuleitung (13) mit dem Wärmetauscher (2) und das zweite Ende des Wärmetauschers (2) über eine Abwasserableitung (14) mit der Abwasserleitung (1) verbunden ist sowie, dass der Wärmetauscher (2) der Verdampfer des Kältemittelkreislaufs ist.

3. Wärmepumpenanlage nach Anspruch 1, **dadurch gekennzeichnet, dass** die Abwasserpumpe (12) mit einer Zerkleinerungseinrichtung so verbunden ist, dass im Abwasser enthaltene Schmutzpartikel zerkleinert werden.

4. Wärmepumpenanlage nach einem der voranstehenden Ansprüche, **dadurch gekennzeichnet, dass** bei einer bestehenden Abwasserdruckleitung der Wärmetauscher (2) direkt oder über einen Bypass in die Abwasserdruckleitung eingebunden wird.

5. Würmepumpenanlage nach Anspruch 4, **dadurch gekennzeichnet, dass** parallel zum Wärmetauscher (2) eine Bypassleitung vorhanden ist, die so bemessen ist, dass Abwassermengen, die die Kapazität des Wärmetauschers (2) überschreiten, hierüber abgeleitet werden können.

6. Wärmepumpenanlage nach einem der voranstehenden Ansprüche, **dadurch gekennzeichnet, dass** der Wärmetauscher (2) ein Koaxialwärmetauscher ist, bei dem das Abwasser im Innenrohr und das Kältemittel im Ringspalt geführt werden.

7. Wärmepumpenanlage nach einem der voranstehenden Ansprüche 1 - 5, **dadurch gekennzeichnet, dass** der Wärmetauscher (2) ein Koaxialwörmetauscher ist, bei dem das Kältemittel im Innenrohr und das Kältemittel Abwasser im Ringspalt geführt werden.

8. Wärmepumpenanlage nach einem der voranstehenden Ansprüche 1 - 5, **dadurch gekennzeichnet, dass** der Wärmetauscher (2) ein Plattenwörmetauscher ist.

9. Wärmepumpenanlage nach einem der voranstehenden Ansprüche 1 - 5, **dadurch gekennzeichnet, dass** der Wärmetauscher (2) ein Rohrbündelwörmetauscher ist.

10. Wärmepumpenanlage nach einem der voranstehenden Ansprüche 1 - 5, **dadurch gekennzeichnet, dass** der Wärmetauscher (2) als rohrförmiger Verdampfer in der Abwasserleitung angeordnet ist.

11. Wärmepumpenanlage nach einem der voranstehenden Ansprüche, **dadurch gekennzeichnet, dass** durch Umschaltung des Verdichterkreislaufes die Möglichkeit der Wärmeabführung an/in das Abwasser geschaffen wird.

12. Würmepumpenanlage nach einem der voranstehenden Ansprüche, **dadurch gekennzeichnet, dass** Reinigungsstutzen am Beginn und Ende der gesamten Abwasser-Fließstrecke im Bypass oder in einer Teilstrecke angeordnet sind.

13. Wärmepumpenanlage nach Anspruch 12, **dadurch gekennzeichnet, dass** die Reinigungsstutzen mit manueller, halbautomatischer oder automatischer Reinigungsvorrichtung verbunden sind.

14. Wärmepumpenanlage nach einem der voranstehenden Ansprüche, **dadurch gekennzeichnet, dass** Messeinrichtungen für den Volumenstrom und die Temperatur des Abwassers oder der Druckdifferenz vor und nach dem Wörmeübertrager vorhanden sind.

15. Verfahren zum Betreiben einer Wärmepumpenanlage nach einem der voranstehenden Ansprüche, **dadurch gekennzeichnet, dass** ein direkter Wärmeübergang vom Abwasser auf das Kältemittel oder vom Kältemittel auf das Abwasser gewährleistet wird.
